# EUROPÄISCHE PATENTSCHRIFT

(11) **EP 2 567 916 B1**
(45) Veröffentlichungstag und Bekanntmachung des Hinweises auf die Patenterteilung: **02.04.2014**
(21) Anmeldenummer: 11180432.4
(22) Anmeldetag: 07.09.2011
(51) Int. Cl.: B65G 69/28

(54) **Verladebrücke zum Be- und Entladen von Lastkraftwagen sowie Verfahren zu deren Herstellung**
Loading bridge for loading and unloading trucks and method for producing it
Pont de chargement pour le chargement et le déchargement de véhicules de transport de marchandises ainsi que leur procédé de fabrication

(43) Veröffentlichungstag der Anmeldung: 13.03.2013
(73) Patentinhaber: Taubken Bau GmbH, 26901 Lorup (DE); Wilhelm Husen, Stahlbau GmbH & Co. KG, 26903 Surwold (DE)
(72) Erfinder: Taubken, Gerhard, 26901 Lorup (DE)
(74) Vertreter: Jabbusch, Matthias

(56) Entgegenhaltungen:
- EP-A1- 1 714 924
- WO-A1-03/066489
- US-A- 6 106 191

## Beschreibung

Die Erfindung betrifft eine Baueinheit, insbesondere eine Verladebrücke, zum Be- und Entladen von Lastkraftwagen, mit einer Betonfertigteilstruktur und wenigstens einem Hebezeug, dessen Tragrahmen mit wenigstens einem Betonfertigteil der Betonfertigteilstruktur verbunden ist, wobei die Betonfertigteilstruktur und der Tragrahmen des Hebezeuges zu wenigstens einer vorgefertigten Transporteinheit miteinander verbunden sind. Außerdem betrifft die Erfindung ein Verfahren zur Herstellung einer Baueinheit zum Be- und Entladen von Lastkraftwagen, bei dem der Tragrahmen eines Hebezeuges mit wenigstens einem Betonfertigteil einer Betonfertigteilstruktur verbunden wird.

Bei bekannten Verladebrücken weist die Betonfertigteilstruktur eine Anschlussbewehrung auf und ist über einen Ortbeton mit dem Tragrahmen des Hebezeuges vergossen. Das Vergießen erfordert jedoch den Aufbau einer Schalung, die aus Kostengründen regelmäßig aus einfachen Holzbrettern hergestellt wird. Holz hat jedoch den Nachteil, dass es mechanischen Belastungen partiell unterschiedlich nachgibt und dass es bei Kontakt mit wasserhaltigem Frischbeton verzieht. Die Summe aller sich daraus möglicherweise ergebenden Maß- und Formänderungen wird durch die Vorgabe entsprechender Toleranzmaße ausgeglichen, welche unweigerlich die Ausbildung nachteilig großer Spaltmaße zwischen dem Ortbeton und dem Hebezeug zur Folge haben. Dabei ist die Größe dieser Spaltmaße jedoch von wesentlicher Bedeutung bei der energieeffizienten Einhaltung der bei vielen Lebensmitteln einzuhaltenden Kühlketten, da gekühlte Luft die Be- und Verladeräume über die zwischen dem Ortbeton und dem Hebezeug ausgebildeten Spalten verlassen kann bzw. erwärmte Außenluft über die zwischen dem Ortbeton und dem Hebezeug ausgebildeten Spalten in die gekühlten Be- und Verladeräume eindringen kann. Bei Wetterlagen mit anhaltenden Minustemperaturen führt die Feuchtigkeit der die Be- und Entladeräume über die Spalten verlassenden wärmeren Innenluft zu einer Vereisung der unter der Flurförderebene des Hebezeuges liegenden Räume. Dabei nimmt die Vereisung regelmäßig problematische Ausmaße an. Um die Betriebssicherheit bekannter Verladebrücken in Bezug auf die Gängigkeit ihrer Hebezeuge sowie in Bezug auf die Zugänglichkeit ihrer für LKW-Ladebordwände vorgesehenen Unterfahrten zu gewährleisten, ist deshalb die regelmäßige Durchführung arbeitsintensiver Reinigungs- und Abtauvorgänge erforderlich.

Zum Vorfertigen einer transportablen Baueinheit ist es bekannt, dass kein Ortbeton und damit auch keine Schalung zum Einsatz kommt, deren Maß-und Formänderungen durch die Vorgabe nachteilig großer Toleranzmaße ausgeglichen werden müssen. Die Verbindung der Betonfertigteilstruktur mit dem Tragrahmen erfolgt beabstandet zum Einbauort der Transporteinheit an einem zentralen Produktionsort, beispielsweise auf einem Werksgelände oder in einer Werkshalle. Um die Transporteinheit mittels eines Sattelzuges von ihrem Produktionsort möglichst kostengünstig an ihren Einbauort verbringen zu können, weist die Transporteinheit vorzugsweise eine Breite von unter drei Metern und ein Gewicht von weniger als 7,5 Tonnen auf. Das werksseitige Verbinden von Betonfertigteilstruktur und Tragrahmen ermöglicht vorteilhaft eine Serienfertigung unter wirtschaftlichem Einsatz von Spezialwerkzeugen und Sondermaschinen, mit denen Toleranzvorgaben enger gehalten und Spaltmaße verkleinert werden können.

Aus der europäischen Anmeldeschrift EP 1 714 924 A1 ist eine Baueinheit und ein Verfahren zur Herstellung einer Baueinheit zum Be- und Entladen von Lastkraftwagen nach den Oberbegriff der Ansprüche 1 und 8 sowie ein Verfahren zum Bau eines Verladeanlegers für einen Einbau von Verladerampen mit einer Transporteinheit gemäß Fig. 10 bekannt, die aus einem Betonfertigteil (Premanufactured pit model) gemäß Fig. 7 sowie einen herstellerseitig in das Betonfertigteil einsetzbaren Hebezeug (leveler ramp 3) zusammengesetzt ist. Die optional auf eine Unterfahrtkonstruktion (structure serving as a base) gemäß Fig. 8 aufstellbare Transporteinheit wird schließlich an ihren Einbauort verbracht, an welchem sie gemäß Fig. 13 mittels eines Ortbetons in einer Gründungsstruktur verankert wird.

Der Erfindung liegt die Aufgabe zugrunde, eine Baueinheit sowie ein Verfahren zu deren Herstellung aufzuzeigen, mit denen eine möglichst spaltfreie Verbindung der Betonfertigteilstruktur mit dem Hebezeug realisierbar ist.

Diese Aufgabe ist erfindungsgemäß durch die Merkmale der Patentansprüche 1 und 8 gelöst. Vorteilhafte Weiterbildungen der Erfindung sind in den jeweils auf diese Patentansprüche rückbezogenen Unteransprüchen angegeben.

Die Baueinheit betreffend zeichnet sich die Erfindung dadurch aus, dass der Tragrahmen des Hebezeuges in wenigstens ein Betonfertigteil der Betonfertigteilstruktur eingegossen ist. Dabei entsteht der Verbund zwischen dem Betonfertigteil und dem Tragrahmen des Hebezeuges bereits während des Abbindeprozesses des zum Betonfertigteil vergossenen Frischbetons. Um die Bindungskräfte zu erhöhen, weist der Tragrahmen des Hebezeuges Befestigungsanker mit Verrippungen und anderen in der Betonfertigteilstruktur einen Formschluss erzeugenden Formgebungen auf. Dabei ist es für die Erfindung unerheblich, ob der Verbund während eines einzigen oder während mehrerer aufeinanderfolgender Abbindeprozesse eines Frischbetons entsteht.

Nach einer besonders vorteilhaften Weiterbildung der Erfindung weist die vorgefertigte Transporteinheit wenigstens zwei Stoßfänger auf, die in wenigstens ein Betonfertigteil der Betonfertigteilstruktur eingegossen sind. Die Stoßfänger dienen der Aufnahme und schadlosen Umwandlung der beim Andocken eines Lastkraftwagens an die Baueinheit frei werdenden Bewegungsenergie in Wärmeenergie.

Dabei entsteht der Verbund zwischen dem Betonfertigteil und den Stoßfängern bereits während des Abbindeprozesses des zu dem Betonfertigteil vergossenen Frischbetons. Um auch hier die Bindungskräfte zu erhöhen, weisen die Stoßfänger Befestigungsanker mit Verrippungen und anderen in der Betonfertigteilstruktur einen Formschluss erzeugenden Formgebungen auf. Die Herstellung des Verbundes zwischen der Betonfertigteilstruktur und den Stoßfängern erfolgt demnach ebenfalls vorab am zentralen Produktionsort der Transporteinheit.

Eine dauerhafte und gleichwohl belastungsfähige Betonfertigteilstruktur ist dadurch geschaffen, dass die Betonfertigteilstruktur aus wenigstens zwei Betonfertigteilen zusammengesetzt ist, die über einen Vergussmörtel unlösbar miteinander verbunden sind. Zusätzlich kann die Verbindung eine in den Vergussmörtel eingebrachte Bewehrung aufweisen. Um die Bindungskräfte zwischen den Betonfertigteilen zu erhöhen, weist die Bewehrung Verrippungen und andere einen Formschluss erzeugende Formgebungen auf.

Nach einer bevorzugten Weiterbildung der Erfindung ist zwischen den miteinander verbundenen Betonfertigteilen eine Unterfahrt ausgebildet. Die Unterfahrt dient der Aufnahme einer LKW-Ladebordwand während eines Be-oder Entladevorganges an der erfindungsgemäßen Baueinheit. Um eine Vereisung und Verunreinigung der Unterfahrt vollständig zu verhindern, weist die Betonfertigteilstruktur einen die Unterfahrt und das Hebezeug räumlich voneinander trennenden Zwischenboden auf. Der Zwischenboden ist vorzugsweise Bestandteil des den Tragrahmen des Hebezeuges aufweisenden Betonfertigteils. Es ist jedoch ebenso möglich, dass der Zwischenboden Bestandteil eines anderen Betonfertigteils der Betonfertigteilstruktur ist.

Um die erfindungsgemäße Baueinheit in der Gründungsstruktur eines Bauwerkes festsetzen zu können, weist die vorgefertigte Transporteinheit eine aus ihrer Betonfertigteilstruktur herausstehende Anschlussbewehrung auf. Dabei entsteht der zwischen einer Transporteinheit und der Gründungsstruktur hergestellte Verbund durch den Abbindeprozess eines die Anschlussbewehrungen in sich aufnehmenden Frischbetons, der als Ortbeton am Einbauort der erfindungsgemäßen Baueinheit vergossen wird.

Um die in ihren Höhen variierenden Ladeflächenebenen verschiedener Lastkraftwagen und eine unveränderliche Flurförderebene eines Bauwerkes für die Be- und Entladevorgänge miteinander verbinden zu können, weist das Hebezeug eine Verladerampe mit wenigstens einer drehbeweglich und verschieblich in der Flurförderebene gelagerten Schwenkachse auf. Dabei dient die Drehbeweglichkeit dem Höhenausgleich der miteinander zu verbindenden Ebenen und die Verschieblichkeit der horizontalen Ausrichtung der Verladerampe an der Ladefläche eines Lastkraftwagens. Vorzugsweise ist die Verschieblichkeit der Schwenkachse durch eine quer und durch eine längs zur Schwenkachse verlaufende Linearführung ausgebildet. Die längs zur Schwenkachse ausgebildete Linearführung dient vorteilhaft dem Ausgleich eines Spurmittenversatzes zwischen einem angedockten Lastkraftwagen und der Verladerampe des Hebezeuges. Die quer zur Schwenkachse verlaufende Linearführung dient hingegen dem Ausgleich der von den Andockpuffern der Lastkraftwagen abhängigen Überbrückungsabstände zwischen den Ladeflächen der Lastkraftwagen und der Verladerampe. Damit ist es auch die Verschieblichkeit der die Verladerampe haltenden Schwenkachse, mit der Toleranzvorgaben enger gehalten und Spaltmaße verkleinert werden können.

Eigenständiger Schutz wird für die Transporteinheit der erfindungsgemäßen Baueinheit beansprucht. Dabei ist es für die Erfindung unerheblich, aus welcher Anzahl von Betonfertigteilen die Betonfertigteilstruktur der erfindungsgemäßen Baueinheit zusammengesetzt ist.

Das Verfahren betreffend zeichnet sich die Erfindung dadurch aus, dass der Tragrahmen in wenigstens eine Dauerform eingebracht wird, dass der Tragrahmen durch ein Befüllen der Dauerform mit Frischbeton zu wenigstens einem Betonfertigteil der Betonfertigteilstruktur vergossen wird, und dass die Betonfertigteilstruktur als vorgefertigte Transporteinheit an einen Einbauort transportiert wird. Die Dauerform ist für eine fortwährende Wiederholung von Gussvorgängen und damit für die Serienfertigung der erfindungsgemäßen Baueinheit geeignet. Nach dem Vergießen von Tragrahmen und Betonfertigteil erfolgt ein Abbindeprozess, nach dessen Beendigung die fertige Transporteinheit entformt wird. Beim Entformen der Transporteinheit erlaubt die Serienfertigung den wirtschaftlichen Einsatz von Sondermaschinen wie Deckenkranen und Schwerlast-Flurförderern. Außerdem erlaubt die Serienfertigung den wirtschaftlichen Einsatz von Spezialwerkzeugen, zu denen im Rahmen der Erfindung auch die Dauerform gehört. Der Einsatz von Spezialwerkzeugen und Sondermaschinen hat den Vorteil, dass Toleranzvorgaben enger gehalten und Spaltmaße verkleinert werden können. Für den Transport der Transporteinheit wird diese an ihrem Produktionsort auf ein Verkehrs mittel, insbesondere einen Sattelzug verladen und mit diesem zum Einbauort gefahren.

Nach einer ersten verfahrenstechnischen Weiterbildung der Erfindung wird die vorgefertigte Transporteinheit am Einbauort in der Gründungsstruktur eines Bauwerkes abgesetzt. Das Verladen und das Absetzen der Transporteinheit erfolgt über leistungsstarke Krane, beispielsweise Autokrane oder Baustellenkrane.

Nach einer nächsten Weiterbildung der Erfindung wird der in die Dauerform eingebrachte Tragrahmen, vor dem Befüllen der Dauerform mit Frischbeton, an wenigstens einem Formkern der Dauerform ausgerichtet. Der mit der Dauerform zusammenwirkende Formkern besteht, wie die Dauerform, aus einem formbeständigen und dauerhaften Material, ist ebenfalls für eine fortwährende Wiederholung von Gießvorgängen und damit für die Serienfertigung der erfindungsgemäßen Baueinheit geeignet. Es liegt im Rahmen der Erfindung, die Ausrichtung des Tragrahmens außerhalb einer mit dem Formkern zusammenwirkenden Mutterform durchzuführen und die Mutterform und den Formkern erst nach dem Ausrichten des Tragrahmens zu der hier in Rede stehenden Dauerform zusammenzusetzen.

Nach einer besonders vorteilhaften Weiterbildung der Erfindung werden vor dem Befüllen der Dauerform mit Frischbeton die Stoßfänger wenigstens einer Andocktraverse in die Dauerform eingebracht und an dieser in vorbestimmter Weise ausgerichtet. Zur Ausrichtung der Stoßfänger weist die Dauerform innenseitig ausgebildete Haltestrukturen auf. Anschließend werden die Stoßfänger durch das Befüllen der Dauerform mit Frischbeton zu der vorgefertigten Transporteinheit formschlüssig miteinander vergossen. Nach dem Vergießen der Stoßfänger in Frischbeton erfolgt der Abbindeprozess, nach dessen Beendigung die fertige Transporteinheit entformt wird.

Um die Transportfähigkeit der erfindungsgemäßen Baueinheit zu verbessern, wird vorgeschlagen, die Betonfertigstruktur aus mehreren Betonfertigteilen zusammenzusetzen. Zur Herstellung eines weiteren Betonfertigteiles werden Anschlussstrukturen herstellende Formteile, wie beispielsweise Hülsenrohre, in eine andere Dauerform eingebracht, und in der Dauerform nachfolgend ein Frischbeton zu wenigstens einem weiteren Betonfertigteil der Betonfertigteilstruktur vergossen. Die Anschlussstrukturen erlauben dabei eine dauerhafte und belastbare Verbindung der einzelnen Betonfertigteile zu der ganzheitlichen Betonfertigteilstruktur.

Besonders bevorzugt ist vorgesehen, die Betonfertigteilstruktur aus zwei Betonfertigteilen zusammenzusetzen. Dazu wird zunächst einmal das die Anschlussstrukturen aufweisende Betonfertigteil an einem Einbauort transportiert und dort in der Gründungsstruktur eines Bauwerkes abgesetzt. Dann wird das den Tragrahmen aufweisende Betonfertigteil an den Einbauort transportiert und dort zur Ausbildung einer Unterfahrt auf dem die Anschlussstrukturen aufweisenden Betonfertigteil abgesetzt. Die beim Aufeinanderstellen der Betonfertigteile hergestellte Unterfahrt dient der Aufnahme einer LKW-Ladebordwand während eines Be- und Entladevorganges an der erfindungsgemäßen Baueinheit. Für den Transport der Betonfertigteile werden diese an ihrem Produktionsort jeweils auf ein separates oder zusammen auf ein einziges Verkehrsmittel, insbesondere einen Sattelzug verladen und mit diesem zum Einbauort bewegt. Das Verladen, das Absetzen sowie das Aufeinandersetzen der Betonfertigteile erfolgt ebenfalls über leistungsstarke Krane, beispielsweise Deckenkrane, Autokrane oder Baustellenkrane. Dabei liegt es im Rahmen der Erfindung, die Betonfertigteile noch an ihrem Produktionsort oder bereits an ihrem Einbauort zu der Betonfertigteilstruktur zusammenzusetzen.

Zur Herstellung einer dauerhaften und gleichwohl belastungsfähigen Betonfertigteilstruktur werden das die Anschlussstrukturen aufweisende Betonfertigteil und das den Tragrahmen aufweisende Betonfertigteil mittels eines Vergussmörtels unlösbar miteinander vergossen. Durch den Einsatz von Bewehrungsstahl wird durch das Vergießen eine hochbelastbare Formschlussverbindung hergestellt, die insbesondere zwischen den Betonfertig teilen wirkende Scherkräfte aufnehmen kann. Derartige Scherkräfte werden beim Andocken der Lastkraftwagen über die Stoßfänger und das den Tragrahmen aufweisende Betonfertigteil in den bewehrten Vergussmörtel eingeleitet.

Nach einer nächsten Weiterbildung der Erfindung werden die vorgefertigte Transporteinheit und die Gründungsstruktur eines Bauwerkes mittels wenigstens eines Ortbetons miteinander verbunden. Dabei entsteht der Verbund insbesondere durch den Abbindeprozess des eine Anschlussbewehrung der Transporteinheit umgebenden Frischbetons.

Zur Schaffung eines mit Flurförderern befahrbaren Anschlusses zwischen der erfindungsgemäßen Baueinheit und dem Bauwerk wird der Ortbeton in wenigstens einer Flurförderebene plan gezogen, die sowohl dem Bauwerk als auch der vorgefertigten Transporteinheit gemeinsam ist. Vorbereitend wird die gemeinsame Flurförderebene dadurch hergestellt, dass die zur Aufnahme der vorgefertigten Transporteinheit vorgesehene Aufstellfläche an der Gründungsstruktur und die Flurförderebene des Bauwerkes einen Höhenunterschied zueinander aufweisen, der genau dem Höhenmaß der vorgefertigten Transporteinheit entspricht.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht eines ersten Betonfertigteils in einer Betonfertigteilstruktur für eine erfindungsgemäße Baueinheit;
- Fig. 2:: eine perspektivische Ansicht des Tragrahmens eines Hebezeuges für die erfindungsgemäße Baueinheit;
- Fig. 3:: eine perspektivische Ansicht eines zweiten Betonfertigteils in einer Betonfertigteilstruktur für die erfindungsgemäße Baueinheit;
- Fig. 4:: eine perspektivische Ansicht der zu einer Betonfertigteilstruktur miteinander verbundenen Betonfertigteile gemäß den Fig. 1 und 3;
- Fig. 5:: eine perspektivische Ansicht einer vorgefertigten Transport-einheit, und
- Fig. 6:: eine perspektivische Ansicht der erfindungsgemäßen Baueinheit bei einer bestimmungsgemäßen Nutzung in der Gründungsstruktur eines Bauwerkes.

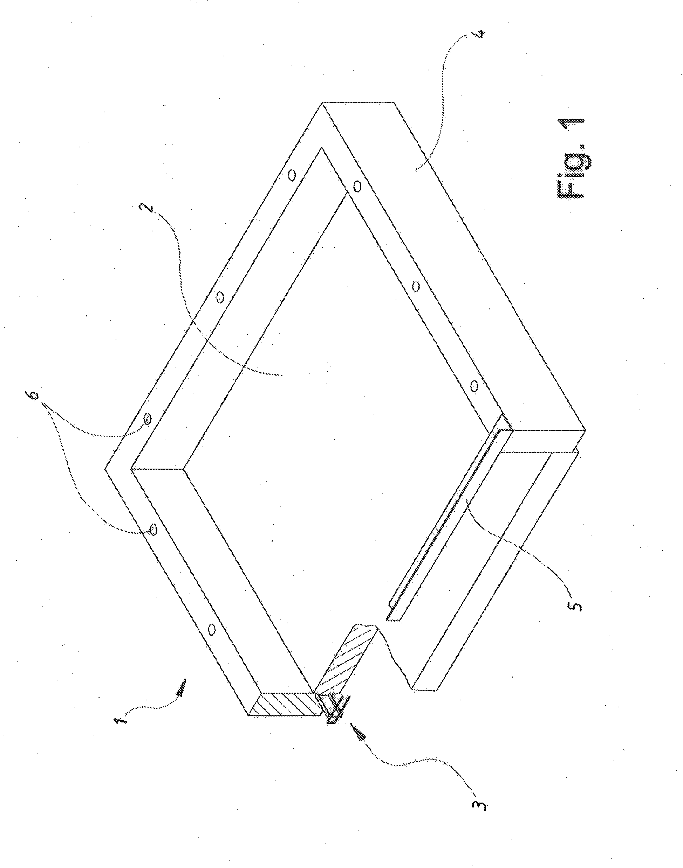

Die Fig. 1 zeigt eine perspektivische Ansicht eines ersten Betonfertigteils 1 in einer Betonfertigteilstruktur für eine erfindungsgemäße Baueinheit zum Be-und Entladen von Lastkraftwagen. Die dargestellte Betonfertigteilstruktur weist eine Sohlplatte 2, einen über einen Rückbiegeanschluss 3 mit der Sohlplatte 2 vergossenen Wandungsrahmen 4 sowie einen den offen ausgebildeten Wandungsrahmen 4 verschließenden Aussteifungsriegel 5 auf. Der Wandungsrahmen 4 weist als zylindrische Durchlässe ausgebildete Anschlussstrukturen 6 auf, die zur Verbindung der dargestellten Betonfertigteilstruktur mit weiteren Betonfertigteilen vorgesehen sind.

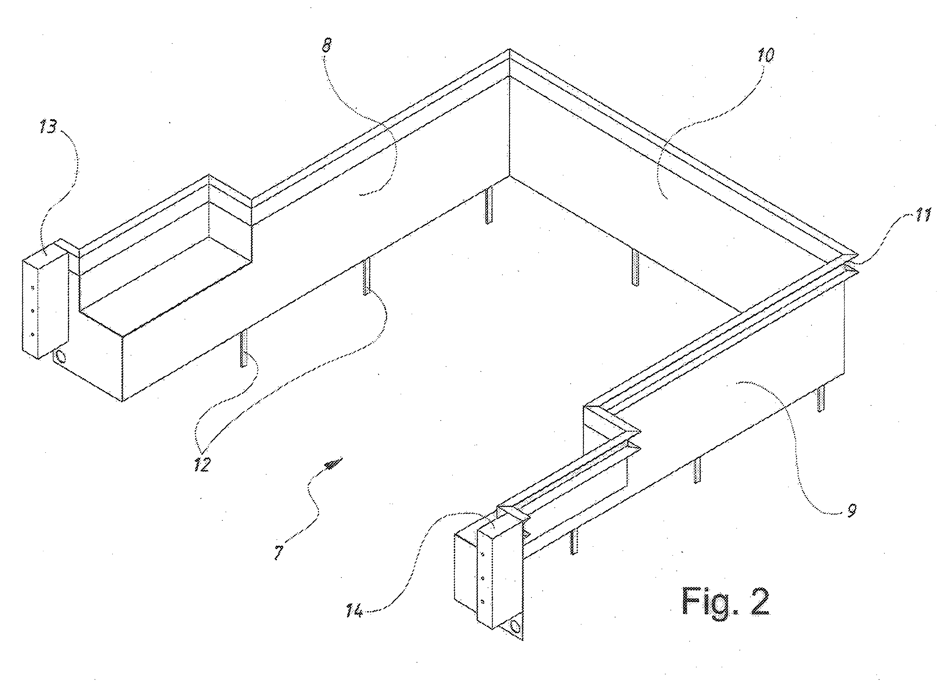

Die Fig. 2 zeigt eine perspektivische Ansicht des Tragrahmens eines Hebezeuges für die erfindungsgemäße Baueinheit. Der als Stahlkonstruktion ausgebildete Tragrahmen 7 setzt sich aus zwei Seitenblechen 8, 9, einem Stirnblech 10 sowie einem die Seitenbleche 8, 9 mit dem Stirnblech 10 versteifend verbindenden Profilstahl 11 zusammen. Die Seitenbleche 8, 9 sowie das Stirnblech 10 weisen jeweils Anschlussstrukturen 12 in Form abwärts gerichtetes Stahlbänder auf, mit denen der Tragrahmen 7 in einem Betonfertigteil vergießbar ist. An den freien Enden der Seitenbleche 8, 9 sowie des Profilstahls 11 sind zwei zur Aufnahme einer Andocktraverse vorgesehene Stoßfänger 13, 14 angeordnet.

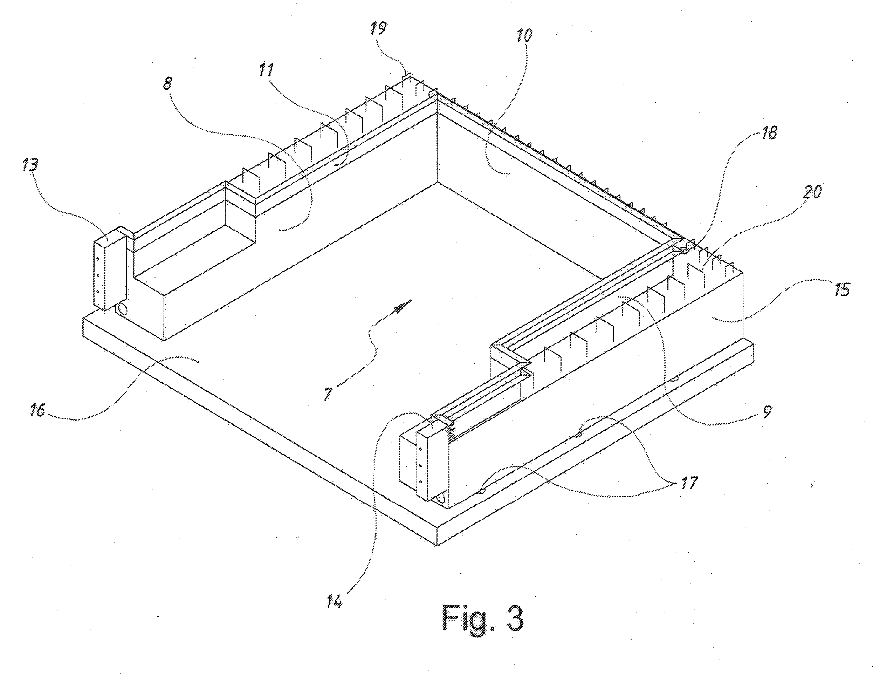

Die Fig. 3 zeigt eine perspektivische Ansicht eines zweiten Betonfertigteils 15 in einer Betonfertigteilstruktur für die erfindungsgemäße Baueinheit. Die dargestellte Betonfertigteilstruktur weist den Tragrahmen 7 auf, der über seine in Fig. 2 dargestellten Anschlussstrukturen 12 in einen Zwischenboden 16 eingegossen ist. Der Zwischenboden 16 sowie das Betonfertigteil 15 weisen jeweils ebenfalls als zylindrische Durchlässe ausgebildete Anschlussstrukturen 17, 18 auf, die zur Verbindung der dargestellten Betonfertigteilstruktur mit der in Fig. 1 dargestellten Betonfertigteilstruktur vorgesehen sind. Außerdem weist die dargestellte Betonfertigteilstruktur aus ihrem Betonfertigteil 15 herausstehende Anschlussbewehrungen 19, 20 auf, die zum Einbau der Betonfertigteilstruktur in die Gründungsstruktur eines Bauwerkes vorgesehen sind. Gleiche Bauteile sind mit gleichen Bezugszahlen sind.

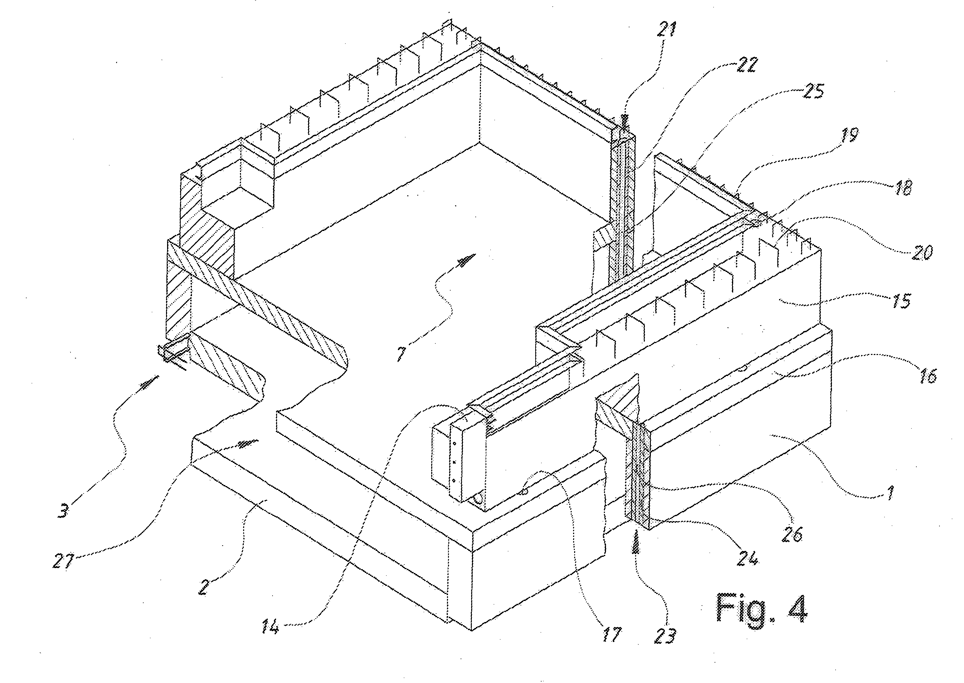

Die Fig. 4 zeigt eine perspektivische Ansicht der zu einer Betonfertigteilstruktur miteinander verbundenen Betonfertigteile 1, 15. Während in regelmäßigen Abständen zwischen der Sohlplatte 2 und beiden Betonfertigteilen 1, 15 angeordnete Verbindungen 21 durch einen die Abschlussstrukturen 6, 17, 18 verfüllenden Vergussmörtel 22 hergestellt sind, sind ebenfalls in regelmäßigen Abständen zwischen der Sohlplatte 2 und dem Betonfertigteil 1 angeordnete Verbindungen 23 durch einen die Anschlussstrukturen 6, 17 verfüllenden Vergussmörtel 24 hergestellt. Zusätzlich weisen die Verbindungen 21, 23 in ihren Vergussmörtel 22, 24 eingebrachte Bewehrungen 25, 26 aus Betonstahl auf. Zwischen den Betonfertigteilen 1, 15 ist eine Unterfahrt 27 zur Aufnahme einer Ladebordwand eines Lastkraftwagens ausgebildet. Gleiche Bauteile sind hier ebenfalls mit gleichen Bezugszahlen versehen.

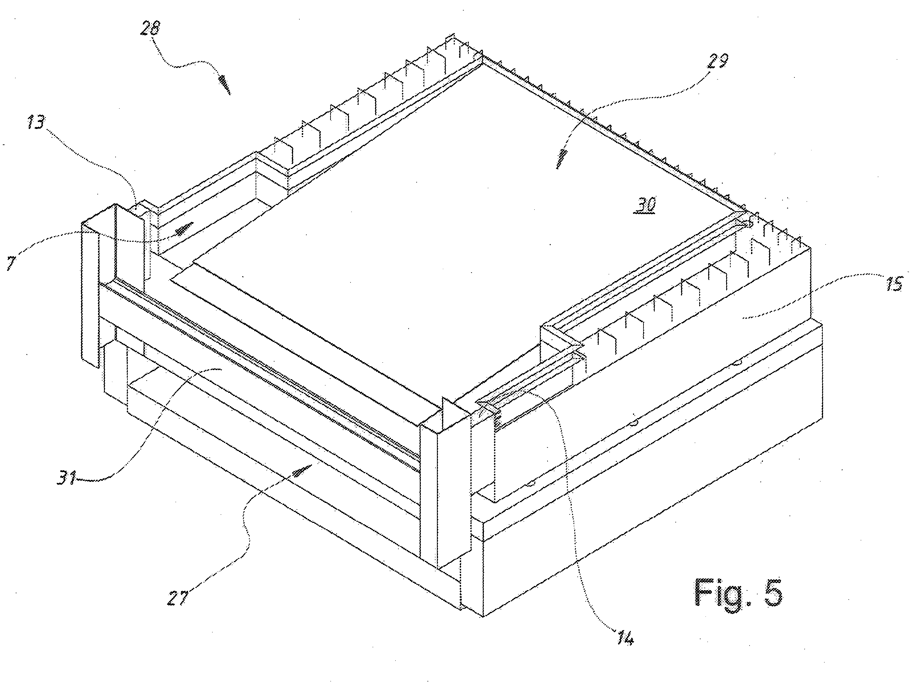

Die Fig. 5 zeigt eine perspektivische Ansicht einer vorgefertigten Transporteinheit 28 mit einem Hebezeug 29, dessen Hubtisch 30 über eine darunter angeordnete Hubmechanik im Tragrahmen 7 des Betonfertigteils 15 aufgenommen ist. Außerdem weist die vorgefertigte Transporteinheit 28 eine an den Stoßfängern 13, 14 hubbeweglich geführte Andocktraverse 31 auf.

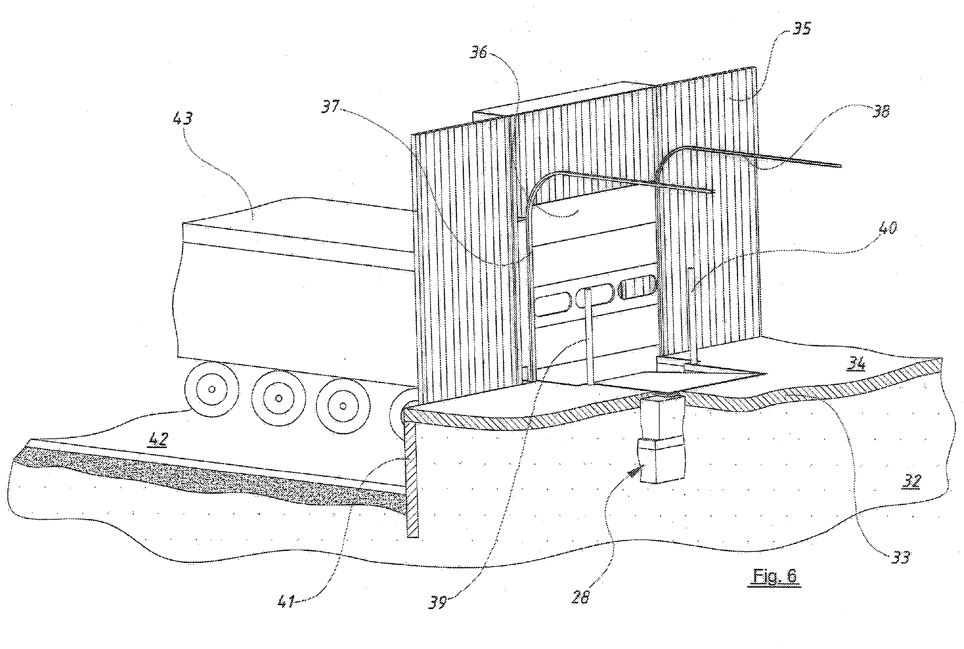

Die Fig. 6 zeigt schließlich eine perspektivische Ansicht der erfindungsgemäßen Baueinheit bei einer bestimmungsgemäßen Nutzung in der Gründungsstruktur 32 eines Bauwerkes. Die Gründungsstruktur 32 und die vorgefertigte Transporteinheit 28 sind mittels eines Ortbetons 33 miteinander vergossen. Randseitig ist der in einer Flurförderebene 34 plangezogene Ortbeton 33 von einer Bauwerkswandung 35 begrenzt, in der ein der Transporteinheit 28 zugeordnetes Sektionaltor 36 angeordnet ist. Aus der Flurförderebene 34 stehen zwei die Führungsschienen 37, 38 des Sektionaltores 36 schützende Rammpfosten 39, 40 heraus. Die Gründungsstruktur 32 des Bauwerkes weist den Ortbeton 33 tragende Streifenfundamente 41 auf, mit denen eine unterhalb der Flurförderebene 34 gelegene Fahrbahnebene 42 geschaffen ist. Vor dem Sektionaltor 36 befindet sich ein auf der Fahrbahnebene 42 an die Transporteinheit 28 herangefahrener Lastkraftwagen 43.

## Patentansprüche

1. Baueinheit, insbesondere Verladebrücke, zum Be- und Entladen von Lastkraftwagen, mit einer Betonfertigteilstruktur (1) und wenigstens einem Hebezeug (29), dessen Tragrahmen (7) mit wenigstens einem Betonfertigteil (1,15) der Betonfertigteilstruktur verbunden ist, wobei die Betonfertigteilstruktur (1) und der Tragrahmen (7) des Hebezeuges (29) zu wenigstens einer vorgefertigten Transporteinheit (28) miteinander verbunden sind,
**dadurch gekennzeichnet,**
**dass** der Tragrahmen (7) des Hebezeuges (29) in wenigstens ein Betonfertigteil (15) der Betonfertigteilstruktur eingegossen ist.

2. Baueinheit nach Anspruch 1, **dadurch gekennzeichnet, dass** die vorgefertigte Transporteinheit (28) wenigstens zwei Stoßfänger (13, 14) aufweist, die in wenigstens ein Betonfertigteil (15) der Betonfertigteilstruktur eingegossen sind.

3. Baueinheit nach Anspruch 2, **dadurch gekennzeichnet, dass** die Betonfertigteilstruktur aus wenigstens zwei Betonfertigteilen (1, 15) zusammengesetzt ist, die über einen Vergussmörtel (22, 24) unlösbar miteinander verbunden sind.

4. Baueinheit nach Anspruch 3, **dadurch gekennzeichnet, dass** zwischen den miteinander verbundenen Betonfertigteilen (1, 15) eine Unterfahrt (27) ausgebildet ist.

5. Baueinheit nach einem der Ansprüche 1 bis 4, **dadurch gekennzeichnet, dass** die vorgefertigte Transporteinheit (28) eine aus ihrer Betonfertigteilstruktur herausstehende Anschlussbewehrung (19, 20) aufweist.

6. Baueinheit nach einem der Ansprüche 1 bis 4, **dadurch gekennzeichnet, dass** das Hebezeug (29) eine Verladerampe (30) mit wenigstens einer drehbeweglich und verschieblich in einer Flurförderebene (34) gelagerten Schwenkachse aufweist.

7. Transporteinheit mit einer Baueinheit nach einem der Ansprüche 1 bis 6.

8. Verfahren zur Herstellung einer Baueinheit insbesondere Verladebrücke, zum Be- und Entladen von Last-kraftwagen, bei dem der Tragrahmen (7) eines Hebezeuges (29) mit wenigstens einem Betonfertigteil (1,15) einer Betonfertigteilstruktur verbunden wird, zur Herstellung einer Baueinheit nach einem der Ansprüche 1 bis 7,
**dadurch gekennzeichnet,**
**dass** der Tragrahmen (7) in wenigstens eine Dauerform eingebracht wird, dass der Tragrahmen (7) durch ein Befüllen der Dauerform mit Frischbeton zu wenigstens einem Betonfertigteil (15) der Betonfertigteilstruktur vergossen wird, und
**dass** die Betonfertigteilstruktur als vorgefertigte Transporteinheit (28) an einen Einbauort transportiert wird.

9. Verfahren nach Anspruch 8, **dadurch gekennzeichnet, dass** die vorgefertigte Transporteinheit (28) am Einbauort in der Gründungsstruktur (32) eines Bauwerkes abgesetzt wird.

10. Verfahren nach Anspruch 8 oder 9, **dadurch gekennzeichnet, dass** der in die Dauerform eingebrachte Tragrahmen (7), vor dem Befüllen der Dauerform mit Frischbeton, an wenigstens einem Formkern der Dauerform ausgerichtet wird.

11. Verfahren nach einem der Ansprüche 8 bis 10, **dadurch gekennzeichnet, dass** vor dem Befüllen der Dauerform mit Frischbeton die Stoßfänger (13, 14) wenigstens einer Andocktraverse (31) in die Dauerform eingebracht werden.

12. Verfahren nach einem der Ansprüche 8 bis 11, **dadurch gekennzeichnet, dass** Anschlussstrukturen (6) herstellende Formteile in eine andere Dauerform eingebracht werden, und dass in der Dauerform ein Frischbeton zu wenigstens einem weiteren Betonfertigteil (1) der Betonfertigteilstruktur vergossen wird.

13. Verfahren nach Anspruch 12, **dadurch gekennzeichnet, dass** zunächst das die Anschlussstrukturen (6) aufweisende Betonfertigteil (1) an einen Einbauort transportiert, dort in der Gründungsstruktur (32) eines Bauwerkes abgesetzt wird und dann das den Tragrahmen (7) aufweisende Betonfertigteil (15) an den Einbauort transportiert und dort unter Ausbildung einer Unterfahrt (27) auf dem die Anschlussstrukturen (6) aufweisenden Betonfertigteil (1) abgesetzt wird.

14. Verfahren nach Anspruch 12 oder 13, **dadurch gekennzeichnet, dass** das die Anschlussstrukturen (6) aufweisende Betonfertigteil (1) und das den Tragrahmen (7) aufweisende Betonfertigteil (15) mittels eines Vergussmörtels (22, 24) unlösbar miteinander verbunden werden.

15. Verfahren nach einem der Ansprüche 9 bis 14, **dadurch gekennzeichnet, dass** die vorgefertigte Transporteinheit (28) und die Gründungsstruktur (32) eines Bauwerkes mittels wenigstens eines Ortbetons (33) miteinander verbunden werden.

16. Verfahren nach Anspruch 15, **dadurch gekennzeichnet, dass** der Ortbeton (33) in wenigstens einer vorbestimmten Flurförderebene (34) plangezogen wird.

## Claims

1. A structural unit, in particular loading bridge, for loading and unloading commercial vehicles, having a precast concrete part structure (1) and at least one lifting gear (22), the support frame (7) of which is connected to at least one precast concrete part (1, 15) of the precast concrete part structure, wherein the precast concrete part structure (1) and the support frame (7) of the lifting gear (29) are connected to each other to form at least one prefabricated transport unit (28),
**characterised in that**
the support frame (7) of the lifting gear (29) is embedded in at least one precast concrete part (15) of the precast concrete part structure.

2. The structural unit according to Claim 1, **characterised in that**
the prefabricated transport unit (28) has at least two bumpers (13, 14), which are embedded in at least one precast concrete part (15) of the precast concrete part structure.

3. The structural unit according to Claim 2, **characterised in that**
the precast concrete part structure is composed of at least two precast concrete parts (1, 15), which are connected non-detachably to each other by means of a grout (22, 24).

4. The structural unit according to Claim 3, **characterised in that**
an undercut (27) is formed between the precast concrete parts (1, 15) connected to each other.

5. The structural unit according to any one of Claims 1 to 4,
**characterised in that**
the prefabricated transport unit (28) has connection reinforcements (19, 20), which project out of the precast concrete part structure thereof.

6. The structural unit according to any one of Claims 1 to 4,
**characterised in that**
the lifting gear (29) has a loading ramp (30) having at least one pivot axle, which is mounted such that it can move in a rotating manner and can be displaced in a floor conveying plane (34).

7. A transport unit having a structural unit according to any one of Claims 1 to 6.

8. A method for producing a structural unit, in particular loading bridge, for loading and unloading commercial vehicles, in which the support frame (7) of a lifting gear (29) is connected to at least one precast concrete part (1, 15) of a precast concrete part structure, to produce a structural unit according to any one of Claims 1 to 7,
**characterised in that**
the support frame (7) is introduced into at least one permanent mould,
the support frame (7) is cast to form at least one precast concrete part (15) of the precast concrete part structure by filling of the permanent mould with wet concrete, and
the precast concrete part structure is transported as a prefabricated transport unit (28) to an installation site.

9. The method according to Claim 8,
**characterised in that**
the prefabricated transport unit (28) is set down in the foundation structure (32) of a building at the installation site.

10. The method according to Claim 8 or 9, **characterised in that**
the support frame (7) introduced into the permanent mould is aligned using at least one mould core of the permanent mould before the permanent mould is filled with wet concrete.

11. The method according to any one of Claims 8 to 10, **characterised in that**
before the permanent mould is filled with wet concrete the bumpers (13, 14) of at least one docking crossbeam (31) are introduced into the permanent mould.

12. The method according to any one of Claims 8 to 11, **characterised in that**
mould parts that produce connection structures (6) are introduced into another permanent mould, and that a wet concrete is cast in the permanent mould to form at least one further precast concrete part (1) of the precast concrete part structure.

13. The method according to Claim 12,
**characterised in that**
first the precast concrete part (1) having the connection structures (6) is transported to an installation site, set down in the foundation structure (32) of a building there and then the precast concrete part (15) having the support frame (7) is transported to the installation site and set down there on the precast concrete part (1) having the connection structures (6), forming an undercut (27).

14. The method according to Claim 12 or 13, **characterised in that**
the precast concrete part (1) having the connection structures (6) and the precast concrete part (15) having the support frame (7) are connected non-detachably to each other by means of a grout (22, 24).

15. The method according to any one of Claims 9 to 14, **characterised in that**
the prefabricated transport unit (28) and the foundation structure (32) of a building are connected to each other by means of at least one in-situ concrete (33).

16. The method according to Claim 15,
**characterised in that**
the in-situ concrete (33) is levelled in at least one predefined floor conveying plane (34).

## Revendications

1. Unité structurelle, pont de transbordement, pour le chargement et déchargement de poids lourds, comportant une structure de pièce finie en béton (1) et au moins un engin de levage (23), dont le châssis de levage (7) est relié à au moins une pièce finie en béton (1,13) de la structure de pièce finie en béton, dans laquelle la structure de pièce finie en béton (1) et le châssis porteur (7) de l'engin de levage (29) sont reliés l'un à l'autre en au moins une unité de transport (28) préfabriquée, **caractérisée en ce que** le châssis porteur (7) de l'engin de levage (29) est coulé dans au moins une pièce finie en béton (15) de la structure de pièce finie en béton.

2. Unité structurelle selon la revendication 1, **caractérisée en ce que** l'unité de transport préfabriquée (28) présente au moins deux pare-chocs (13,14), qui sont coulés dans au moins une pièce finie en béton (15) de la structure de pièce de finie en béton.

3. Unité structurelle selon la revendication 2, **caractérisée en ce que** la structure de pièce finie en béton est composée d'au moins deux pièces finies en béton (1,15), qui sont reliées de manière irréversible par un mortier de scellement (22,24).

4. Unité structurelle selon la revendication 3, **caractérisée en ce que** un dispositif anti-encastrement (27) est réalisé entre les pièces finies en béton (1,15) reliées l'une à l'autre.

5. Unité structurelle selon une des revendications 1 à 4, **caractérisée en ce que** l'unité de transport préfabriquée (28) présente une armature de raccordement (19,20) dépassant hors de sa structure de pièce finie en béton.

6. Unité structurelle selon une des revendications 1 à 4, **caractérisée en ce que** l'engin de levage (29) présente une rampe de transbordement (30) avec au moins un axe de pivotement positionné de manière rotative et déplaçable dans un plan de transport (34).

7. Unité de transport comportant une unité structurelle selon une des revendications 1 à 6.

8. Procédé de fabrication d'une unité structurelle, notamment d'un pont de transbordement pour le chargement et déchargement de poids lourds, dans lequel le châssis porteur (7) d'un engin de levage (29) est relié avec au moins une pièce finie en béton (1,15) d'une structure de pièce finie en béton, afin de produire une unité structurelle selon une des revendications 1 à 7, **caractérisé en ce que** le châssis porteur (7) est encastré dans au moins un moule permanent, **en ce que** le châssis porteur (7) est coulé au moyen d'un remplissage du moule permanent avec du béton frais en au moins une pièce finie en béton (15) de la structure de pièce finie en béton et **en ce que** la structure de pièce finie en béton est transportée comme une unité de transport préfabriquée (28) sur un site de montage.

9. Procédé selon la revendication 8, **caractérisé en ce que** l'unité de transport préfabriquée (28) est déposée sur le site de montage dans les fondations (32) d'un édifice.

10. Procédé selon les revendications 8 ou 9, **caractérisé en ce que** le châssis porteur (7) encastré dans le moule permanent, avant le remplissage du moule permanent avec du béton frais, est aligné sur au moins un noyau de moule du moule permanent.

11. Procédé selon une des revendications 8 à 10, **caractérisé en ce que** avant le remplissage du moule permanent avec du béton frais, les pare-chocs (13,14) d'au moins une traverse d'amarrage (31) sont encastrés dans le moule permanent.

12. Procédé selon au moins une des revendications 8 à 11, caractérisé en ce qye des pièces façonnées produisant des structures de raccordement (6) sont encastrées dans un autre moule permanent, et en ce que dans le moule permanent un béton frais est coulé en au moins une autre pièce finie en béton (1) de la structure de pièce finie en béton.

13. Procédé selon la revendication 12, **caractérisé en ce que** tout d'abord la pièce finie en béton (1) présentant les structures de raccordement (6) est transportée sur un site de montage, y est déposée dans les fondations (32) d'un édifice et ensuite la pièce finie en béton (15) présentant le châssis porteur (7) est transporté sur le site de montage et y est déposé en formant un dispositif anti-encastrement (27) sur la pièce finie en béton (1) présentant les structures de raccordement (6).

14. Procédé selon les revendications 12 ou 13, **caractérisé en ce que** la pièce finie en béton (1) présentant les structures de raccordement (6) et la pièce finie en béton (15) présentant le châssis porteur (7) sont reliés l'un à l'autre de manière irréversible au moyen d'un mortier de scellement (22,24).

15. Procédé selon une des revendications 9 à 14, **caractérisé en ce que** l'unité de transport préfabriquée (28) et les fondations (32) d'un édifice sont reliées l'une à l'autre au moyen d'au moins un béton coulé sur place (33).

16. Procédé selon la revendication 15, **caractérisé en ce que** le béton coulé sur place (33) est égalisé dans au moins un plan de transport (34) prédéterminé.
